# EUROPÄISCHE PATENTSCHRIFT

(11) **EP 1 592 751 B1**
(45) Veröffentlichungstag und Bekanntmachung des Hinweises auf die Patenterteilung: **18.10.2006**
(21) Anmeldenummer: 04705789.8
(22) Anmeldetag: 28.01.2004
(51) Int. Cl.: C09D 4/00, C08F 2/48, C08F 2/46

(54) **MIT AKTINISCHER STRAHLUNG HÄRTBARE MASSE, VERFAHREN ZU IHRER HERSTELLUNG UND IHRE VERWENDUNG**
MATERIAL WHICH CAN BE HARDENED BY MEANS OF ACTINIC RADIATION, METHOD FOR THE PRODUCTION THEREOF AND USE OF THE SAME
SUBSTANCE DURCISSABLE AU MOYEN D'UN RAYONNEMENT ACTINIQUE, SES PROCEDES DE PRODUCTION ET SON UTILISATION

(30) Priorität: 12.02.2003 DE 10305666
(43) Veröffentlichungstag der Anmeldung: 09.11.2005
(73) Patentinhaber: BASF Coatings AG, 48165 Münster (DE)
(72) Erfinder: BAUMGART, Hubert, Münster D-48162 (DE); DEUTRICH, Susanne, Münster D-48165 (DE); JOOST, Karl-Heinz, Drensteinfurt D-48317 (DE); MEISENBURG, Uwe, Duisburg D-47051 (DE); RINK, Heinz-Peter, Münster D-48153 (DE); STEGEMANN, Nicole, Senden D-48308 (DE)
(86) Internationale Anmeldenummer: PCT/EP2004/000713
(87) Internationale Veröffentlichungsnummer: WO 2004/072190

(56) Entgegenhaltungen:
- DE-A- 19 930 067

## Beschreibung

Die vorliegende Erfindung betrifft eine mit aktinischer Strahlung härtbare Masse.

Außerdem betrifft die vorliegende Erfindung ein Verfahren zur Herstellung einer mit aktinischer Strahlung härtbaren Masse.

Des weiteren betrifft die vorliegende Erfindung die Verwendung der mit aktinischer Strahlung härtbaren Masse und der nach dem Verfahren hergestellten Masse zur Herstellung von Beschichtungen, Klebschichten, Dichtungen, Formteilen und Folien.

Nicht zuletzt betrifft die vorliegende Erfindung die Beschichtungen, Klebschichten, Dichtungen, Formteile und Folien.

Ferner betrifft die vorliegende Erfindung die Verwendung von p-Menthadienen und olefinisch ungesättigten Monomeren der allgemeinen Formel I

**R**^{**1**}**R**^{**2**}**C=CR**^{**3**}**R**^{**4**} **(I),**

worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste stehen, mit der Maßgabe, dass mindestens zwei der Variablen R¹, R² , R³ und R⁴ für substituierte oder unsubstituierte Aryl-, Arylalkyl- oder Arylcycloalkylreste, insbesondere substituierte oder unsubstituierte Arylreste, stehen; als Stabilisatoren von mit aktinischer Strahlung härtbaren Massen.

Mit aktinischer Strahlung, insbesondere UV-Strahlung, härtbare Massen und ihre Verwendung zur Herstellung von Beschichtungen sind beispielsweise aus dem deutschen Patent DE 197 09 467 C 1 bekannt. Die bekannten, mit UV-Strahlung härtbaren Massen sind vergleichsweise lagerstabil. Sie sind als Klarlacke oder Decklacke für die Herstellung von Mehrschichtlackierungen, insbesondere auf dem Kraftfahrzeugsektor, geeignet. Ein weiterer Vorteil ist, dass sie als lösemittelfreie, so genannte 100%-Systeme vorliegen, weswegen bei ihrer Herstellung, Applikation und Härtung keine oder so gut wie keine Emissionen organischer Verbindungen eintritt.

Die hieraus hergestellten Beschichtungen verfügen über eine hohe Kratzfestigkeit, Chemikalienbeständigkeit, Feuchteresistenz und Polierbarkeit. Außerdem weisen sie eine gute Witterungsbeständigkeit, eine gute Säure/Base-Beständigkeifi und eine gute Beständigkeit gegenüber Vogelkot, einen hohen Glanz und eine gute Appearance auf.

Die Stabilität der bekannten, mit aktinischer Strahlung härtbaren Massen gegenüber thermischen und mechanischen Belastungen muss jedoch weiterentwickelt werden, um den stetig wachsenden Ansprüchen der Anwender zu genügen. So kann es unter ungünstigen Praxisbedingungen manchmal zu Anhaftungen in den Applikationsanlagen kommen, was insbesondere zu Störungen der Ventile oder zu Verstopfungen der empfindlichen Düsen führen kann.

Selbst wenn die thermischen und mechanischen Belastungen der bekannten, mit aktinischer Strahlung härtbaren Massen nur zu einer geringen Schädigung führt, die sich bei der Applikation nicht störend bemerkbar macht, können die resultierenden Beschichtungen Stippen aufweisen, was insbesondere bei den technologisch und ästhetisch besonders anspruchsvollen Automobillackierungen nicht akzeptabel ist.

Olefinisch ungesättigte Monomere der allgemeinen Formel I

**R**^{**1**}**R**^{**2**}**C=CR**^{**3**}**R**^{**4**} **(I),**

worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste stehen, mit der Maßgabe, dass mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen; sind beispielsweise aus der deutschen Patentanmeldung DE 199 30 067 A 1 bekannt. Sie werden als Comonomere zur Herstellung von in Wasser dispergierbaren Copolymerisaten eingesetzt.

p-Menthadiene kommen in der Natur vor. Sie werden beispielsweise in der Lackindustrie als Lösemittel eingesetzt werden. So ist Dipenten mit den üblichen und bekannten organischen Lösemitteln mischbar und verhindert beispielsweise die Hautbildung oxidativ härtender (lufttrocknender) Alkydharzlacke (vgl. Römpp Online, 2002, »Limonen«). Depanol ®, ein Gemisch verschiedener p-Menthadiene, wird für Herstellung von Öl- und Alkydharzlacken verwendet. Es verbessert die Verstreichbarkeit, setzt die Neigung zur Hautbildung in erheblichem Maße herab und erhöht den Glanz. Im allgemeinen wird es bis zu 20%, bezogen auf den Lösemittelanteil, verwendet (vgl. Römpp Online, 2002 »Depanol ®«).

alpha-Terpinen kann als Inhibitor der Selbstpolymerisation von Tetrafluorethylen eingesetzt werden.

Die Verwendung der Verbindungen der allgemeinen Formel I und der p-Menthadiene als Stabilisatoren von mit aktinischer Strahlung härtbaren Massen ist nicht bekannt.

Aufgabe der vorliegenden Erfindung ist es, eine mit aktinischer Strahlung härtbare Masse bereitzustellen, die die Nachteile des Standes der Technik nicht mehr länger aufweist, sondern die als 100%-System lagerstabil und stabil gegenüber thermischer und mechanischer Schädigung ist, bei der Applikation keine Anhaftungen in den Applikationsanlagen bildet und keine Störungen und Verstopfungen der Ventile und empfindlichen Düsen hervorruft. Außerdem soll sie neue, stippenfreie Beschichtungen liefern. Des weiteren soll die neue, mit aktinischer Strahlung härtbare Masse auch als Klebstoff und Dichtungsmasse für die Herstellung von neuen, mit aktinischer Strahlung gehärteten Klebschichten und Dichtungen geeignet sein. Nicht zuletzt soll sie sich auch für die Herstellung von mit aktinischer Strahlung gehärteten Formteilen und Folien eignen.

Die aus der mit aktinischer Strahlung härtbare Masse hergestellten Beschichtungen sollen insbesondere eine hohe Kratzfestigkeit, Chemikalienbeständigkeit, Feuchteresistenz und Polierbarkeit haben. Außerdem sollen sie eine gute Witterungsbeständigkeit, eine gute Säure/Base-Beständigkeit und eine gute Beständigkeit gegenüber Vogelkot, einen hohen Glanz und eine gute Appearance aufweisen. Nicht zuletzt sollen sie eine besonders glatte Oberfläche haben und frei von Stippen sein.

Die aus der neuen, mit aktinischer Strahlung härtbaren Masse hergestellten neuen Klebschichten sollen besonders langlebig sein und eine besonders hohe Klebkraft auch bei extremen und/oder wechselnden klimatischen Bedingungen aufweisen.

Die aus der mit aktinischer Strahlung härtbaren Masse hergestellten Dichtungen sollen gleichfalls besonders langlebig sein, eine besonders hohe Dichtungsfähigkeit gegenüber chemisch und physikalisch aggressiven Medien auch bei extremen und/oder wechselnden klimatischen Bedingungen haben und mechanisch stabil sein.

Die aus der mit aktinischer Strahlung härtbaren Masse hergestellten Formteile und Folien sollen gleichfalls die vorstehend geschilderten Vorteile aufweisen und dabei auch bei extremen und/oder wechselnden klimatischen Bedingungen dimensionsstabil sein.

Des weiteren war es die Aufgabe der vorliegenden Erfindung ein Verfahren zur Herstellung einer mit aktinischer Strahlung härtbaren Masse zu entwickeln, das einfach durchzuführen ist und sehr gut reproduzierbar eine mit aktinischer Strahlung härtbare Masse liefert, die die vorstehend beschriebenen Vorteile aufweisen soll.

Nicht zuletzt war es die Aufgabe der vorliegenden Erfindung, eine neue Verwendung für p-Menthadiene sowie für olefinisch ungesättigte Monomere der allgemeinen Formel I zu finden.

Demgemäß wurde die mit aktinischer Strahlung härtbare Masse gefunden, enthaltend, bezogen auf ihre Gesamtmenge, 0,1 bis 5 Gew.-% mindestens einer Verbindung (A), ausgewählt aus der Gruppe, bestehend aus p-Menthadienen und olefinisch ungesättigten Monomeren der allgemeinen Formel I

**R**^{**1**}**R**^{**2**}**C=CR**^{**3**}**R**^{**4**} (I),

worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste stehen, mit der Maßgabe, dass mindestens zwei der Variablen R¹, R² , R³ und R⁴ für substituierte oder unsubstituierte Aryl-, Arylalkyl- oder Arylcycloalkylreste, insbesondere substituierte oder unsubstituierte Arylreste, stehen.

Im Folgenden wird die mit aktinischer Strahlung härtbare Masse als »erfindungsgemäße Masse« bezeichnet.

Außerdem wurde das Verfahren zur Herstellung einer mit aktinischer Strahlung härtbaren Masse durch Vermischen ihrer Bestandteile gefunden, bei dem man, bezogen auf die Gesamtmenge der Bestandteile, 0,1 bis 5 Gew.-% mindestens einer Verbindung (A), ausgewählt aus der Gruppe, bestehend aus p-Menthadienen und von olefinisch ungesättigten Monomeren der allgemeinen Formel I

**R**^{**1**}**R**^{**2**}**C=CR**^{**3**}**R**^{**4**} (I),

worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste stehen, mit der Maßgabe, dass mindestens zwei der Variablen R¹, R² , R³ und R⁴ für substituierte oder unsubstituierte Aryl-, Arylalkyl- oder Arylcycloalkylreste, insbesondere substituierte oder unsubstituierte Arylreste, stehen; einsetzt.

Im Folgenden wird das Verfahren zur Herstellung einer mit aktinischer Strahlung härtbaren Masse als »erfindungsgemäßes Herstellverfahren« bezeichnet.

Nicht zuletzt wurde die Verwendung von p-Menthadienen und von olefinisch ungesättigten Monomeren der allgemeinen Formel 1

**R**^{**1**}**R**^{**2**}**C=CR**^{**3**}**R**^{**4**} (I),

worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste stehen, mit der Maßgabe, dass mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen; als Stabilisatoren für mit aktinischer Strahlung härtbaren Massen gefunden, was im Folgenden als »erfindungsgemäße Verwendung« bezeichnet wird

Des weiteren wurde die Verwendung der erfindungsgemäßen Masse für die Herstellung von d. h. erfindungsgemäßen, Beschichtungen, Klebschichten, Dichtungen, Formteilen und Folien gefunden.

Weitere Erfindungsgegenstände gehen aus der Beschreibung hervor.

Im Hinblick auf den Stand der Technik war es überraschend und für den Fachmann nicht vorhersehbar, dass die Aufgabe, die der vorliegenden Erfindung zugrunde lag mit Hilfe der erfindungsgemäßen Verwendung und der erfindungsgemäßen Masse gelöst werden konnte.

Insbesondere war es überraschend, dass sich die p-Menthadiene und die olefinisch ungesättigten Monomere der allgemeinen Formel I bereits in geringen Mengen hervorragend als Stabilisatoren von mit aktinischer Strahlung härtbaren Massen, insbesondere von 100%-Systemen, eignen und diese Massen gegenüber thermischer und mechanischer Schädigung stabilisieren.

Außerdem war es überraschend, dass die erfindungsgemäße Masse als 100%-System lagerstabil und stabil gegenüber thermischer und mechanischer Schädigung war, bei der Applikation keine Anhaftungen in den Applikationsanlagen bildete und keine Störungen und Verstopfungen der Ventile und empfindlichen Düsen hervorrief. Außerdem lieferte sie stippenfreie erfindungsgemäße Beschichtungen. Des weiteren eignete sich die erfindungsgemäße Masse auch hervorragend als Klebstoff und Dichtungsmasse für die Herstellung von erfindungsgemäßen Klebschichten und Dichtungen. Nicht zuletzt eignete sie sich auch hervorragend für die Herstellung von mit aktinischer Strahlung gehärteten Formteilen und Folien.

Die erfindungsgemäßen Beschichtungen wiesen insbesondere eine hohe Kratzfestigkeit, Chemikalienbeständigkeit, Feuchteresistenz und Polierbarkeit auf. Außerdem hatten sie eine gute Witterungsbeständigkeit, eine gute Säure/Base-Beständigkeit und eine gute Beständigkeit gegenüber Vogelkot, einen hohen Glanz und eine gute Appearance. Nicht zuletzt wiesen sie eine besonders glatte Oberfläche auf und waren frei von Stippen und Kratern.

Die erfindungsgemäßen Klebschichten waren besonders langlebig und wiesen eine besonders hohe Klebkraft auch bei extremen und/oder wechselnden klimatischen Bedingungen auf.

Die erfindungsgemäßen Dichtungen waren gleichfalls besonders langlebig, wiesen eine besonders hohe Dichtungsfähigkeit gegenüber chemisch und physikalisch aggressiven Medien auch bei extremen und/oder wechselnden klimatischen Bedingungen auf und waren mechanisch besonders stabil.

Die erfindungsgemäßen Formteile und Folien wiesen gleichfalls die vorstehend geschilderten Vorteile auf und waren dabei auch bei extremen und/oder wechselnden klimatischen Bedingungen dimensionsstabil.

Das erfindungsgemäße Herstellverfahren war einfach durchzuführen und lieferte sehr gut reproduzierbar die erfindungsgemäße Masse, die die vorstehend beschriebenen Vorteile aufwies.

Die erfindungsgemäße Masse enthält mindestens eine Verbindung (A), die aus der Gruppe der p-Menthadiene ausgewählt wird. Zusätzlich oder alternativ hierzu enthält die erfindungsgemäße Masse mindestens eine Verbindung (A), die aus der Gruppe der olefinisch ungesättigten Monomeren der allgemeinen Formel I ausgewählt wird.

Vorzugsweise werden die p-Menthadiene (A) aus der Gruppe, bestehend aus den natürlich vorkommenden p-Menthadienen, ausgewählt. Besonders bevorzugt werden sie aus der Gruppe, bestehend aus alpha-, beta- und gamma-Terpinen, Terpinolen, (+)-(S)-alpha-Phellandren, (-)-(R)-alpha-Phellandren, (+)-(S)-beta-Phellandren, (-)-(R)-befia-Phellandren, (+)-(R)-Limonen, (-)-(S)-Limonen und (±)-Limonen (Dipenten), ausgewählt. Insbesondere wird gamma-Terpinen verwendet.

In der allgemeinen Formel I stehen die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste, mit der Maßgabe, daß mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen.

Beispiele geeigneter Alkylreste sind Methyl, Ethyl, Propyl, Isopropyl, n-Butyl, iso-Butyl, tert.-Butyl, Amyl, Hexyl oder 2-Ethylhexyl.

Beispiele geeigneter Cycloalkylreste sind Cyclobutyl, Cyclopentyl oder Cyclohexyl.

Beispiele geeigneter Alkylcycloalkylreste sind Methylencyclohexan, Ethylencyclohexan oder Propan-1,3-diyl-cyclohexan.

Beispiele geeigneter Cycloalkylalkylreste sind 2-, 3- oder 4-Methyl-, -Ethyl-, -Propyl- oder -Butylcyclohex-1-yl.

Beispiele geeigneter Arylreste sind Phenyl, Naphthyl oder Biphenylyl, vorzugsweise Phenyl und Naphthyl und insbesondere Phenyl.

Beispiele geeigneter Alkylarylreste sind Benzyl oder Ethylen- oder Propan-1,3-diyl-benzol.

Beispiele geeigneter Cycloalkylarylreste sind 2-, 3-, oder 4-Phenylcyclohex-1-yl.

Beispiele geeigneter Arylalkylreste sind 2-, 3- oder 4-Methyl-, -Ethyl-, - Propyl- oder -Butylphen-1-yl.

Beispiele geeigneter Arylcycloalkylreste sind 2-, 3- oder 4-Cyclohexylphen-1-yl.

Die vorstehend beschriebenen Reste R¹, R², R³ und R⁴ können substituiert sein. Hierzu können elektronenziehende oder elektronenschiebende Atome oder organische Reste verwendet werden.

Beispiele geeigneter Substitutienten sind Halogenatome, insbesondere Chlor und Fluor, Nitrilgruppen, Nitrogruppen, partiell oder vollständig halogenierte, insbesondere chlorierte und/oder fluorierte, Alkyl-, Cycloalkyl-, Alkylcycloalkyl-, Cycloalkylalkyl-, Aryl-, Alkylaryl-, Cycloalkylaryl- Arylalkyl- und Arylcycloalkylreste, inclusive der vorstehend beispielhaft genannten, insbesondere tert.-Butyl; Aryloxy-, Alkyloxy- und Cycloalkyloxyreste, insbesondere Phenoxy, Naphthoxy, Methoxy, Ethoxy, Propoxy, Butyloxy oder Cyclohexyloxy; Arylthio-, Alkylthio- und Cycloalkylthioreste, insbesondere Phenylthio, Naphthylthio, Methylthio, Ethylthio, Propylthio, Butylthio oder Cyclohexylthio; Hydroxylgruppen; und/oder primäre, sekundäre und/oder tertiäre Aminogruppen, insbesondere Amino, N-Methylamino, N-Ethylamino, N-Propylamino, N-Phenylamino, N-Cyclohexylamino, N,N-Dimethylamino, N,N-Diethylamino, N,N-Dipropylamino, N,N-Diphenylamino, N,N-Dicyclohexylamino, N-Cyclohexyl-N-methylamino oder N-Ethyl-N-methylamino.

Beispiele für erfindungsgemäß besonders bevorzugt verwendete Monomere der allgemeinen Formel I sind 1,1-Diphenylethylen, 1,1-Dinaphthalinethylen, cis- oder trans- Stilben, Vinyliden-bis(4-N,N-dimethylaminobenzol), Vinyliden-bis(4-aminobenzol) oder Vinyliden-bis(4-nitrobenzol).

Erfindungsgemäß wird Verbindung (A) in einer Menge von 0,1 bis 5, vorzugsweise 0,1 bis 4, insbesondere 0,1 bis 3 und besonders bevorzugt 0,1 bis 2 Gew.-%, jeweils bezogen auf die Gesamtmenge der erfindungsgemäßen Masse, eingesetzt.

Die erfindungsgemäße Masse ist vorzugsweise ein flüssiges oder festes 100%-System.

Vorzugsweise ist das feste 100%-System ein Pulverlack mit einer üblichen und bekannten mittleren Korngröße und Korngrößenverteilung. Bevorzugt liegt die mittlere Korngröße bei 10 bis 90 µm, der Anteil an Partikeln einer Teilchengröße < 10 µm ist vorzugsweise < 10 Gew.-%, der Anteil an Partikeln einer Teilchengröße > 100 µm ist vorzugsweise < 1 Gew.-%. Besonders bevorzugt ist die Korngrößenverteilung eng.

Besonders bevorzugt ist die erfindungsgemäße Masse ein flüssiges 100%-System.

Wesentlich für die erfindungsgemäße Masse als 100%-System ist, dass sie wesentlich geringere Mengen an organischen Lösemitteln als die üblichen und bekannten, konventionellen, d. h. lösemütelhaltigen, mit aktinischer Strahlung härtbaren Massen enthält.

Die erfindungsgemäße Masse ist mit aktinischer Strahlung härtbar. Zusätzlich kann sie auch noch thermisch härtbar sein, was vor der Fachwelt als Dual-Cure bezeichnet wird.

Als aktinische Strahlung kommt elektromagnetische Strahlung und/oder Korpuskularstrahlung in Betracht. Die elektromagnetische Strahlung umfasst nahes Infrarot (NIR), sichtbares Licht, UV-Strahlung, Röntgenstrahlung und Gammastrahlung, insbesondere UV-Strahlung. Die Korpuskularstrahlung umfasst Elektronenstrahlung, Alphastrahlung, Protonenstrahlung und Neutronenstrahlung, insbesondere Elektronenstrahlung.

Bis auf die erfindungsgemäß zu verwendende Verbindung (A) ist die stoffliche Zusammensetzung der erfindungsgemäßen Masse nicht kritisch, sondern basiert auf den üblichen und bekannten, mit aktinischer Strahlung härtbaren Massen, insbesondere 100%-Systemen. Dies untermauert einen weiteren besonderen Vorteil der erfindungsgemäßen Verwendung, nämlich dass sie nicht auf eine enge Klasse mit aktinischer Strahlung härtbarer Massen beschränkt ist, sondern außerordentlich breit angewandt werden kann.

Demnach kann die erfindungsgemäße Masse alle üblichen und bekannten Bestandteile mit aktinischer Strahlung härtbarer Massen enthalten, wie strahlenhärtbare Bindemittel, strahlenhärtbare Reaktiwerdünner und Photoinitiatoren. Darüber hinaus kann sie übliche und bekannte Hilfs- und Zusatzstoffe, wie Lichtschutzmittel, Haftvermittler (Tackifier), Slipadditive, Verlaufmittel, Polymerisationsinhibitoren, Mattierungsmittel, Nanopartikel und filmbildende Hilfsmittel, enthalten.

Beispiele geeigneter mit aktinischer Strahlung härtbarer Massen, die als Basis der erfindungsgemäßen Masse in Betracht kommen, sind beispielsweise aus dem deutschen Patent DE 197 09 467 C 1, Seite 4, Zeile 30, bis Seite 6, Zeile 30, oder der deutschen Patentanmeldung DE 199 47 523 A 1 bekannt.

Ist die erfindungsgemäße Masse auch noch thermisch härtbar, d. h. Dual-Cure-härtbar, enthält sie vorzugsweise noch übliche und bekannte thermisch härtende Bindemittel und Vernetzungsmittel und/oder thermisch härtende Reaktivverdünner, sowie dies beispielsweise in den deutschen Patentanmeldungen DE 198 187 735 A 1 und DE 199 20 799 A 1 oder der europäischen Patentanmeldung EP 0 928 800 A 1 beschrieben wird.

Die Herstellung der erfindungsgemäßen Masse erfolgt vorzugsweise nach dem erfindungsgemäßen Herstellverfahren durch Vermischen der vorstehend beschriebenen Bestandteile in geeigneten Mischaggregaten wie Rührkessel, Rührwerksmühlen, Extruder, Kneter, Ultraturrax, In-line-Dissolver, statische Mischer, Mikromischer, Zahnkranzdispergatoren, Druckentspannungsdüsen und/oder Microfluidizer. Vorzugsweise wird hierbei unter Ausschluss von Licht einer Wellenlänge λ < 550 nm oder unter völligem Ausschluss von Licht gearbeitet, um eine vorzeitige Vemetzung der erfindungsgemäßen Masse zu verhindern.

Die erfindungsgemäße Masse dient der Herstellung mit aktinischer Strahlung gehärteter Massen, insbesondere von Beschichtungen, Lackierungen, Formteilen und frei tragenden Folien.
Insbesondere dienen die Beschichtungen, Lackierungen und freitragenden Folien dem Schutz von Oberflächen von Substraten vor der Beschädigung durch mechanische Einwirkung und/oder zu ihrer Dekoration.
Zur Herstellung der erfindungsgemäßen Formteile und Folien wird die erfindungsgemäße Masse auf übliche und bekannte temporäre oder permanente Substrate appliziert. Vorzugsweise werden für die Herstellung der erfindungsgemäßen. Folien und Formteilen übliche und bekannte temporäre Substrate verwendet, wie Metall- und Kunststoffbänder oder Hohlkörper aus Metall, Glas, Kunststoff, Holz oder Keramik, die leicht entfernt werden können, ohne dass die erfindungsgemäßen Folien und Formteile beschädigt werden.
Wird die erfindungsgemäße Masse für die Herstellung von Beschichtungen, Klebschichten und Dichtungen verwendet, werden permanente Substrate eingesetzt; wie Kraftfahrzeuge oder Teile hiervon, Bauwerke, Möbel, Fenster und Türen, industrielle Kleinteile, Coils, Container, Emballagen, weiße Ware, Folien, optische Bauteile, elektrotechnische Bauteile, mechanische Bauteile, Bauteile für weiße Ware sowie Glashohlkörper handelt. Die erfindungsgemäßen Folien und Formteile können ebenfalls als Substrate dienen.
Außerdem umfaßt von der vorliegenden Erfindung ist ein Verfahren zur Herstellung mit aktinischer Strahlung gehärteter Massen aus mit aktinischer Strahlung härtbaren Massen durch Strahlenhärtung, wobei man hierbei eine mit aktinischer Strahlung härtbare Masse wie vorstehend beschrieben verwendet.

Methodisch weist die Applikation der flüssigen erfindungsgemäßen Masse keine Besonderheiten auf, sondern kann durch alle üblichen und bekannten Applikationsmethoden, wie z.B. Spritzen, Sprühen, Rakeln, Streichen, Gießen, Tauchen, Träufeln oder Walzen erfolgen.

Auch die Applikation der pulverförmigen erfindungsgemäßen Masse weist keine methodischen Besonderheiten auf, sondern erfolgt beispielsweise nach den üblichen und bekannten Wirbelschichtverfahren, wie sie beispielsweise aus den Firmenschriften von BASF Coatings AG, »Pulverlacke für industrielle Anwendungen«, Januar 2000, oder »Coatings Partner, Pulverlack Spezial«, 1/2000, oder Römpp Lexikon Lacke und Druckfarben, Georg Thieme Verlag, Stuttgart, New York, 1998, Seiten 187 und 188, »Elektrostatisches Pulversprühen«, »Elektrostatisches Sprühen« und »Elektrostatisches Wirbelbadverfahren«, bekannt sind.

Bei der Applikation empfiehlt es sich, unter Ausschluss von aktinischer Strahlung zu arbeiten, um eine vorzeitige Vernetzung der erfindungsgemäßen Masse zu vermeiden.

Vorzugsweise wird die applizierte erfindungsgemäße Masse mit UV-Strahlung gehärtet. Bevorzugt wird bei der Bestrahlung eine Strahlendosis von 100 bis 6.000, vorzugsweise 200 bis 3.000, bevorzugt 300 bis 1.500 und besonders bevorzugt 500 bis 1.200 mJcm⁻² eingesetzt, wobei der Bereich < 1.200 mJcm⁻² ganz besonders bevorzugt ist.

Dabei kann die Strahlenintensität breit variieren. Sie richtet sich insbesondere nach der Strahlendosis einerseits und der Bestrahlungsdauer andererseits. Die Bestrahlungsdauer richtet sich bei einer vorgegebenen Strahlendosis nach der Band- oder Vorschubgeschwindigkeit der Substrate in der Bestrahlungsanlage und umgekehrt. Vorzugsweise liegt die Strahlenintensität bei 1x10° bis 3x10⁵, bevorzugt 2x10° bis 2x10⁵, besonders bevorzugt 3x10° bis 1,5x10⁵ und insbesondere 5x10° bis 1,2x10⁵ Wm⁻².

Als Strahlenquellen für die UV-Strahlung können alle üblichen und bekannten UV-Lampen verwendet werden. Es kommen auch Blitzlampen in Betracht, die aber erfindungsgemäß weniger bevorzugt sind. Vorzugsweise werden als UV-Lampen Quecksilberdampflampen, bevorzugt Quecksilbernieder-, -mittel- und -hochdruckdampflampen, insbesondere Quecksilbermitteldruckdampflampen, verwendet. Besonders bevorzugt werden unmodifizierte Quecksilberdampflampen plus geeignete Filter oder modifizierte, insbesondere dotierte, Quecksilberdampflampen verwendet.

Bevorzugt werden galliumdotierte und/oder eisendotierte, insbesondere eisendotierte, Quecksilberdampflampen verwendet, wie sie beispielsweise in R. Stephen Davidson, »Exploring the Science, Technology and Applications of U.V. and E.B. Curing«, Sita Technology Ltd., London, 1999, Chapter I, »An Overview«, Seite 16, Figure 10, oder Dipl.-Ing. Peter Klamann, »eltosch System-Kompetenz, UV-Technik, Leitfaden für Anwender«, Seite 2, Oktober 1998, beschrieben werden.

Beispiele geeigneter Blitzlampen sind Blitzlampen der Firma VISIT.

Der Abstand der UV-Lampen von der applizierten erfindungsgemäßen Masse kann überraschend breit variieren und daher sehr gut auf die Erfordernisse des Einzelfalls eingestellt werden. Vorzugsweise liegt der Abstand bei 2 bis 200, bevorzugt 5 bis 100, besonders bevorzugt 10 bis 50 und insbesondere 15 bis 30 cm. Deren Anordnung kann außerdem den Gegebenheiten des Substrats und der Verfahrensparameter angepasst werden. Bei kompliziert geformten Substraten, wie sie für Automobilkarosserien vorgesehen sind, können die nicht direkter Strahlung zugänglichen Bereiche (Schattenbereiche), wie Hohlräume, Falzen und andere konstruktionsbedingte Hinterschneidungen, mit Punkt-, Kleinflächen-oder Rundumstrahlern, verbunden mit einer automatischen Bewegungseinrichtung für das Bestrahlen von Hohlräumen oder Kanten, ausgehärtet werden.

Die Bestrahlung kann unter einer sauerstoffabgereicherten Atmosphäre durchgeführt. "Sauerstoffabgereichert" bedeutet, dass der Gehalt der Atmosphäre an Sauerstoff geringer ist als der Sauerstoffgehalt von Luft (20,95 Vol.-%). Die Atmosphäre kann im Grunde auch sauerstofffrei sein, d. h., es handelt sich um ein Inertgas. Wegen der fehlenden inhibierenden Wirkung von Sauerstoff kann dies aber eine starke Beschleunigung der Strahlenhärtung bewirken, wodurch Inhomogenifiäten und Spannungen in den erfindungsgemäßen gehärteten Massen entstehen können. Es ist daher von Vorteil, den Sauerstoffgehalt der Atmosphäre nicht auf Null Vol.-% abzusenken.

Bei der applizierten, Dual-Cure-härtbaren, erfindungsgemäßen Masse kann die thermische Härtung beispielsweise mit Hilfe eines gasförmigen, flüssigen und/oder festen, heißen Mediums, wie heiße Luft, erhitztes Öl oder erhitzte Walzen, oder von Mikrowellenstrahlung, Infrarotlicht und/oder nahem Infrarotlicht (NIR). Vorzugsweise erfolgt das Erhitzen in einem Umluftofen oder durch Bestrahlen mit IR- und/oder NIR-Lampen. Wie bei der Härtung mit aktinischer Strahlung kann auch die thermische Härtung stufenweise erfolgen. Vorteilhafterweise erfolgt die thermische Härtung bei Temperaturen von Raumtemperatur bis 200°C.

Sowohl die thermische Härtung als auch die Härtung mit aktinischer Strahlung können stufenweise durchgeführt werden. Dabei können sie hintereinander (sequenziell) oder gleichzeitig erfolgen. Erfindungsgemäß ist die sequenzielle Härtung von Vorteil und wird deshalb bevorzugt verwendet. Es ist dabei von besonderem Vorteil, die thermische Härtung nach der Härtung mit aktinischer Strahlung durchzuführen.

Die resultierenden erfindungsgemäßen Folien, Formteile, Beschichtungen, Klebschichten und Dichtungen eignen sich hervorragend für das Beschichten, Verkleben, Abdichten, Umhüllen und Verpacken von Kraftfahrzeugkarosserien und Teile hiervon, Bauwerken im Innen- und Außenbereich und Teilen hiervon, Türen, Fenstern, Möbeln, Glashohlkörpern, Coils, Container, Emballagen, industriellen Kleinteilen, wie Muttern, Schrauben, Felgen oder Radkappen, elektrotechnischen Bauteilen, wie Wickelgüter (Spulen, Statoren, Rotoren), optischen Bauteilen, mechanischen Bauteilen und Bauteilen für weiße Ware, wie Radiatoren, Haushaltsgeräte, Kühlschrankverkleidungen oder Waschmaschinenverkleidungen.

Vor allem aber wird die erfindungsgemäße Masse als Beschichtungsstoff, bevorzugt als Decklack oder Klarlack, insbesondere als Klarlack zur Herstellung farb- und/oder effektgebender, elektrisch leitfähiger, magnetisch abschirmender oder fluoreszierender Mehrschichtlackierungen, speziell farb- und/oder effektgebender Mehrschichtlackierungen, eingesetzt. Für die Herstellung der Mehrschichtlackierungen können übliche und bekannte Nass-in-nass-Verfahren und Lackaufbauten angewandt werden.

Bei den resultierenden erfindungsgemäßen Klarlackierungen handelt es sich um die äußersten Schichten der Mehrschichtlackierungen, die wesentlich den optischen Gesamteindruck (Appearance) bestimmen und die farb- und/oder effektgebenden Schichten vor mechanischer und chemischer Schädigung und Schädigung durch Strahlung schützen. Deswegen machen sich auch Defizite in der Härte, Kratzfestigkeit, Chemikalienbeständigkeit und der Stabilität gegenüber Vergilbung bei der Klarlackierung besonders stark bemerkbar. So aber weisen die erfindungsgemäßen Klarlackierungen nur eine geringe Vergilbung auf. Sie sind hoch kratzfest und zeigen nach dem Zerkratzen nur sehr geringe Glanzverluste. Gleichzeitig haben sie eine hohe Härte. Nicht zuletzt haben sie eine besonders hohe Chemikalienfestigkeit und haften sehr fest auf den farb- und/oder effektgebenden Schichten.

Die erfindungsgemäßen Substrate, die mit erfindungsgemäßen Beschichtungen beschichtet, mit erfindungsgemäßen Klebschichten verklebt, mit erfindungsgemäßen Dichtung abgedichtet und/oder mit erfindungsgemäßen Folien und/oder Formteilen umhüllt oder verpackt sind, weisen daher hervorragende Dauergebrauchseigenschaften und eine besonders lange Gebrauchsdauer auf.

### Beispiele und Vergleichsversuch

### Beispiele 1 bis 3 und Vergleichsversuch V 1

### Die Herstellung mit UV-Strahtung härtbarer Klarlacke

Die Klarlacke der Beispiele 1 bis 3 und der Klarlack des Vergleichsversuchs V 1 wurden durch Vermischen der in der Tabelle angegebenen Bestandteile und Homogenisieren der resultierenden Mischungen hergestellten. Dabei wurde unter Ausschluss von sichtbarem Licht gearbeitet.

Die Stabilität der Klarlacke gegenüber thermischer und mechanischer Belastung wurde durch Messung der "Onset-Temperatur" der Polymerisation mit Hilfe der Differantial-Thermoanalyse (Differential Scanning Calorimertrie, DSC) und des Greased Valve Index bestimmt.

Ihre Härtungseigenschaften wurde anhand der vertikalen Reaktivität bestimmt.

Für die Bestimmung des Greased Valve Index wurden die Schließmechanismen von gefetteten Kugelventilen mit den Klarlacken benetzt. Die Kugelventile wurden anschließend so lange geöffnet und geschlossen, bis die Klarlacke vernetzt waren und dadurch die Kugelventile unbeweglich machten. Die jeweilige Anzahl der Öffnungs- und Schließvorgänge wurde ermittelt und zu einer Note zusammengefaßt:

### Note Anzahl der Öffnungs- und Schließvorgänge

- 1: ≤10
- 2: 11 - 25
- 3: 25-50
- 4: 51 - 100
- 5: > 100

Für die Bestimmung der vertikalen Reaktivität wurden die Klarlacke in einer Schichtdicke von 40 µm auf Bleche appliziert. Die Bleche wurden senkrecht in schwarze Kästen gestellt und in dieser Anordnung von oben mit UV-Strahlung bestrahlt. Bekanntermaßen nahm dadurch der Grad der Aushärtung der Klarlacke von oben nach unten ab. Die Reaktivität der Klarlacke war dann spezifikationsgerecht, wenn sie auf einer Fläche, die sich von der oberen Kante der Bleche mindestens 70 mm senkrecht nach unten erstreckte, vollständig gehärtet waren.

Die Versuchsergebnisse finden sich ebenfalls in der Tabelle.

| **Tabelle 1: Stoffliche Zusammensetzung der Klarlacke der Beispiele 1 bis 3 und des Klarlacks des Vergleichsversuchs V 1 und ihre Stabilität** | | | | |
|---|---|---|---|---|
| **Bestandteil** | **Beispiele:** | | | **Vgl.** |
| | **1** | **2** | **3** | **V1** |
| Dipentaerythritpentaacrylat | 34,95 | 34,6 | 34,6 | 35,3 |
| | | | | |
| Tricyclodecandimethanoldiacrylat | 55,38 | 54,8 | 54,8 | 55,94 |
| | | | | |
| Styrolfreies ungesättigtes Polyesterharz (80%ig in Xylol Haftvermittler, Degussa/Hüls) | 4,8 | 4,75 | 4,75 | 4,86 |
| | | | | |
| Polysiloxan mit entständigen olefinisch ungesättigten Gruppen (reaktives Verlaufs-, Slip- und Antiblockingmittel) | 0,7 | 0,7 | 0,7 | 0,7 |
| | | | | |
| Polyethermodifiziertes Polydimethylsiloxan | 0,2 | 0,2 | 0,2 | 0,2 |
| | | | | |
| Hydroxycyclohexylphenylketon | 2,97 | 2,95 | 2,95 | 3 |
| | | | | |
| 1,1-Diphenylethan | 1 | - | 2 | - |
| | | | | |
| Gamma-Terpinen | - | 2 | - | - |
| | | | | |
| Onset-Temperatur (°C) | 145 | 140 | 158 | 129 |
| | | | | |
| Greased Valve Index | 5 | 5 | 5 | 1 |
| | | | | |
| Vertikale Reaktivität (mm) | 95 | 107 | 78 | > 70 |

Der Vergleich der Messergebnisse zeigt, dass die Klarlacke der Beispiele 1 bis 3 signifikant stabiler gegenüber thermischer und mechanischer Belastung waren als der Klarlack des Vergleichsversuchs V 1. Dabei entsprach die vertikale Reaktivität der Klarlacke der Beispiele 1 bis 3 überraschenderweise der vertikalen Reaktivität des Klarlacks des Vergleichsversuchs V 1. Somit konnten die Klarlacke der Beispiele 1 bis 3 bei höheren Temperaturen und damit vorteilhaft niedrigeren Viskositäten appliziert werden als der Klarlack des Vergleichsversuchs V 1.

Ansonsten wiesen die Klarlacke der Beispiele 1 bis 3 und des Vergleichsversuchs V 1 die gleichen vorteilhaften anwendungstechnischen Eigenschaften auf und lieferten Ktartackierungen, die insbesondere eine hohe Kratzfestigkeit, Chemikalienbeständigkeit, Feuchteresistenz und Polierbarkeit aufwiesen. Außerdem hatten sie eine gute Witterungsbeständigkeit, eine gute Säure/Base-Beständigkeit und eine gute Beständigkeit gegenüber Vogelkot, einen hohen Glanz und eine gute Appearance. Nicht zuletzt wiesen sie eine besonders glatte Oberfläche auf und waren frei von Stippen und Kratern.

## Patentansprüche

1. Mit aktinischer Strahlung härtbare Masse, enthaltend, bezogen auf ihre Gesamtmenge, 0,1 bis 5 Gew.-% mindestens einer Verbindung (A), ausgewählt aus der Gruppe, bestehend aus p-Menthadienen und olefinisch ungesättigten Monomeren der allgemeinen Formel 1
**R**^{**1**}**R**^{**2**}**C=CR**^{**3**}**R**^{**4**} (I),
worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste stehen, mit der Maßgabe, dass mindestens zwei der Variablen R¹, R² , R³ und R⁴ für substituierte oder unsubstituierte Aryl-, Arylalkyl- oder Arylcycloalkylreste stehen.

2. Mit aktinischer Strahlung härtbare Masse nach Anspruch 1, **dadurch gekennzeichnet, daß** mindestens zwei der Variablen R¹, R², R³ und R⁴ für substituierte oder unsubstituierte Arylreste stehen.

3. Mit aktinischer Strahlung härtbare Masse nach Anspruch 1 und 2, **dadurch gekennzeichnet, dass** sie ein flüssiges oder festes 100%-System ist.

4. Mit aktinischer Strahlung härtbare Masse nach einem der Ansprüche 1 bis 3, **dadurch gekennzeichnet, dass** sie mit elektromagnetischer Strahlung und/oder Korpuskularstrahlung härtbar ist.

5. Mit aktinischer Strahlung härtbare Masse nach Anspruch 4, **dadurch gekennzeichnet, dass** die elektromagnetische Strahlung nahes Infrarot (NIR), sichtbares Licht, UV-Strahlung, Röntgenstrahlung und Gammastrahlung und die Korpuskularstrahlung Elektronenstrahlung umfasst.

6. Mit aktinischer Strahlung härtbare Masse nach Anspruch 5, **dadurch gekennzeichnet, dass** die elektromagnetische Strahlung UV-Strahlung ist.

7. Mit aktinischer Strahlung härtbare Masse nach einem der Ansprüche 1 bis 6, **dadurch gekennzeichnet, dass** sie, bezogen auf ihre Gesamtmenge 0,1 bis 2 Gew.-% mindestens einer Verbindung (A) enthält.

8. Mit aktinischer Strahlung härtbare Masse nach einem der Ansprüche 1 bis 7, **dadurch gekennzeichnet, dass** die p-Menthadiene (A) aus der Gruppe, bestehend aus den natürlich vorkommenden p-Menthadienen ausgewählt werden.

9. Mit aktinischer Strahlung härtbare Masse nach Anspruch 8, **dadurch gekennzeichnet, dass** die p-Menfhadiene (A) aus der Gruppe, bestehend aus alpha-, beta- und gamma-Terpinen, Terpinolen, (+)-(S)-alpha-Phellandren, (-)-(R)-alpha-Phellandren, (+)-(S)-beta-Phellandren, (-)-(R)-beta-Phellandren, (+)-(R)-Limonen, (-)-(S)-Limonen und (±)-Limonen (Dipenten), ausgewählt werden.

10. Mit aktinischer Strahlung härtbare Masse nach Anspruch 9, **dadurch gekennzeichnet, dass** sie gamma-Terpinen enthält.

11. Mit aktinischer Strahlung härtbare Masse nach einem der Ansprüche 1 bis 10, **dadurch gekennzeichnet, dass** es sich bei den Arylresten R¹, R², R³ und/oder R⁴ der Verbindung (A) der allgemeinen Formel 1 um Phenyl- oder Naphthylreste handelt.

12. Mit aktinischer Strahlung härtbare Masse nach einem der Ansprüche 1 bis 11, **dadurch gekennzeichnet, dass** die Substituenten in den Resten R¹, R², R³ und/oder R⁴ der Verbindung (A) der allgemeinen Formel I elektronenziehende oder elektronenschiebende Atome oder organische Reste sind.

13. Mit aktinischer Strahlung härtbare Masse nach Anspruch 12, **dadurch gekennzeichnet, dass** die Substituenten in den Resten R¹, R², R³ und/oder R⁴ der Verbindung (A) der allgemeinen Formel I Halogenatome, Nitril-, Nitro-, partiell oder vollständig halogenierte Alkyl-, Cycloalkyl-, Alkylcycloalkyl-, Cycloalkylalkyl-, Aryl-, Alkylaryl-, Cycloalkylaryl-Arylalkyl- und Arylcycloalkylreste; Aryloxy-, Alkyloxy- und Cycloalkyloxyreste; Arylthio-, Alkylthio- und Cycloalkylthioreste; Hydroxylgruppen und/oder primäre, sekundäre und/oder tertiäre Aminogruppen sind.

14. Verfahren zur Herstellung einer mit aktinischer Strahlung härtbaren Masse gemäß einem der Ansprüche 1 bis 13 durch Vermischen ihrer Bestandteile, **dadurch gekennzeichnet, daß** man, bezogen auf die Gesamtmenge der Bestandteile, 0,1 bis 5 Gew.-% mindestens eine Verbindung (A), ausgewählt aus der Gruppe, bestehend aus p-Menthadienen und vom olefinisch ungesättigten Monomeren der allgemeinen Formel I
**R**^{**1**}**R**^{**2**}**C=CR**^{**3**}**R**^{**4**} **(I),**
worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste stehen, mit der Maßgabe, dass mindestens zwei der Variablen R¹, R², R³ und R⁴ für substituierte oder unsubstituierte Aryl-, Arylalkyl- oder Arylcycloalkylreste stehen; einsetzt.

15. Verfahren nach Anspruch 14, **dadurch gekennzeichnet, dass** mindestens zwei der Variablen R¹, R², R³ und R⁴ für substituierte oder unsubstituierte Arylreste stehen.

16. Verwendung der mit aktinischer Strahlung härtbaren Massen gemäß einem der Ansprüche 1 bis 13 für die Herstellung mit aktinischer Strahlung gehärteter Massen.

17. Verwendung nach Anspruch 16, **dadurch gekennzeichnet, dass** die mit aktinischer Strahlung gehärteten Massen Beschichtungen, Lackierungen, Formteile und freitragende Folien sind.

18. Verwendung nach Anspruch 17, **dadurch gekennzeichnet, dass** die Beschichtungen, Lackierungen und freitragenden Folien dem Schutz von Oberflächen von Substraten vor der Beschädigung durch mechanische Einwirkung und/oder zu ihrer Dekoration dienen.

19. Verwendung nach Anspruch 18, **dadurch gekennzeichnet, dass** es sich bei den Substraten um Kraftfahrzeuge oder Teile hiervon, Bauwerke, Möbel, Fenster und Türen, industrielle Kleinteile, Coils, Container, Emballagen, weiße Ware, Folien, optische Bauteile, elektrotechnische Bauteile, mechanische Bauteile, Bauteile für weiße Ware sowie Glashohlkörper handelt.

20. Verfahren zur Herstellung mit aktinischer Strahlung gehärteter Massen aus mit aktinischer Strahlung härtbaren Massen durch Strahlenhärtung, **dadurch gekennzeichnet, dass** man hierbei eine mit aktinischer Strahlung härtbare Masse gemäß einem der Ansprüche 1 bis 13 oder eine nach dem Verfahren gemäß Anspruch 14 oder 15 hergestellte, mit aktinischer Strahlung härtbare Masse verwendet.

21. Verwendung von p-Menthadienen und olefinisch ungesättigten Monomeren der allgemeinen Formel I
**R**^{**1**}**R**^{**2**}**C=CR**^{**3**}**R**^{**4**} (I),
worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste stehen, mit der Maßgabe, dass mindestens zwei der Variablen R¹, R² , R³ und R⁴ für substituierte oder unsubstituierte Aryl-, Arylalkyl- oder Arylcycloalkylreste stehen; als Stabilisatoren von mit aktinischer Strahlung härtbaren Massen.

22. Verwendung nach Anspruch 21, **dadurch gekennzeichnet, dass** mindestens zwei der Variablen R¹, R², R³ und R⁴ für substituierte oder unsubstituierte Arylreste stehen.

## Claims

1. Composition curable with actinic radiation, containing, based on its total amount, from 0.1 to 5% by weight of at least one compound (A) selected from the group consisting of p-menthadienes and olefinically unsaturated monomers of the general formula I
**R**^{**1**}**R**^{**2**}**C =CR**^{**3**}**R**^{**4**} (I)
where the radicals R¹, R², R³, and R⁴ each independently are hydrogen atoms or substituted or unsubstituted alkyl, cycloalkyl, alkylcycloalkyl, cycloalkylalkyl, aryl, alkylaryl, cycloalkylaryl, arylalkyl or arylcycloalkyl radicals, with the proviso that at least two of the variables R¹, R², R³, and R⁴ are substituted or unsubstituted aryl, arylalkyl or arylcycloalkyl radicals.

2. Composition according to Claim 1, **characterized in that** at least two of the variables R¹, R², R³ and R⁴ are substituted or unsubstituted aryl radicals.

3. Composition according to Claim 1 and 2, **characterized in that** it is a liquid or solid 100% system.

4. Composition according to one of Claims 1 to 3, **characterized in that** it is curable with electromagnetic radiation and/or corpuscular radiation.

5. Composition according to Claim 4, **characterized in that** the electromagnetic radiation embraces near infrared (NIR), visible light, UV radiation, X-rays, and gamma radiation and the corpuscular radiation embraces electron beams.

6. Composition according to Claim 5, **characterized in that** the electromagnetic radiation is UV radiation.

7. Composition according to any of Claims 1 to 6, **characterized in that**, based on its total amount, it contains from 0.1 to 2% by weight of at least one compound (A).

8. Composition according to any of Claims 1 to 7, **characterized in that** the p-menthadienes (A) are selected from the group consisting of the naturally occurring p-menthadienes.

9. Composition according to Claim 8, **characterized in that** the p-menthadienes (A) are selected from the group consisting of alpha-, beta-, and gamma-terpinene, terpinolene, (+)-(S)-alpha-phellandrene, (-) - (R)-alpha-phellandrene, (+) - (S) - beta-phellandrene, (-)-(R)-beta-phellandrene, (+)-(R)-limonene, (-)-(S)-limonene, and (±)-limonene (dipentene).

10. Composition according to Claim 9, **characterized in that** it comprises gamma-terpinene.

11. Composition according to any of Claims 1 to 10, **characterized in that** the aryl radicals R¹, R², R³ and/or R⁴ of the compound (A) of the general formula I are phenyl or naphthyl radicals.

12. Composition according to any of Claims 1 to 11, **characterized in that** the substituents in the radicals R¹, R², R³ and/or R⁴ of the compound (A) of the general formula I are electron-donating or electron-withdrawing atoms or organic radicals.

13. Composition according to Claim 12, **characterized in that** the substituents in the radicals R¹, R², R³ and/or R⁴ of the compound (A) of the general formula I are halogen atoms, nitrile, nitro, partially or fully halogenated alkyl, cycloalkyl, alkylcycloalkyl, cycloalkylalkyl, aryl, alkylaryl, cycloalkylaryl, arylalkyl, and arylcycloalkyl radicals; aryloxy, alkyloxy, and cycloalkyloxy radicals; arylthio, alkylthio, and cycloalkylthio radicals; hydroxyl groups and/or primary, secondary and/or tertiary amino groups.

14. Process for preparing a composition curable with actinic radiation according to any of Claims 1 to 13 by mixing of its constituents, **characterized in that**, based on the total amount of the constituents, from 0.1 to 5% by weight of at least one compound (A) selected from the group consisting of p-menthadienes and olefinically unsaturated monomers of the general formula I
**R**^{**1**}**R**^{**2**}**C=CR**^{**3**}**R**^{**4**} (I)
where the radicals R¹, R², R³, and R⁴ each independently are hydrogen atoms or substituted or unsubstituted alkyl, cycloalkyl, alkylcycloalkyl, cycloalkylalkyl, aryl, alkylaryl, cycloalkylaryl, arylalkyl or arylcycloalkyl radicals, with the proviso that at least two of the variables R¹, R², R³, and R⁴ are substituted or unsubstituted aryl, arylalkyl or arylcycloalkyl radicals, are used.

15. Process according to Claim 14, **characterized in that** at least two of the variables R¹, R², R³ and R⁴ are substituted or unsubstituted aryl radicals.

16. Use of a composition according to any of Claims 1 to 13 for producing compositions cured with actinic radiation.

17. Use according to Claim 16, **characterized in that** the compositions cured with actinic radiation are coatings, paint systems, moldings, or self-supporting films.

18. Use according to Claim 17, **characterized in that** the coatings, paint systems or self-supporting films serve to decorate and/or protect surfaces of substrates against damage by mechanical exposure.

19. Use according to Claim 18, **characterized in that** the substrates are motor vehicles or parts thereof, buildings, furniture, windows, and doors, small industrial parts, coils, freight containers, packaging, white goods, films, optical components, electrical components, mechanical components, components for white goods, or hollow glassware.

20. Process for producing a composition cured with actinic radiation from a composition curable with actinic radiation by radiation curing, **characterized in that** a composition according to any of Claims 1 to 11 or a composition curable with actinic radiation prepared by the process of Claim 14 or 15 is used.

21. Use of p-menthadienes and of olefinically unsaturated monomers of the general formula I
**R**^{**1**}**R**^{**2**}**C=CR**^{**3**}**R**^{**4**} (I)
where the radicals R¹, R², R³, and R⁴ each independently are hydrogen atoms or substituted or unsubstituted alkyl, cycloalkyl, alkylcycloalkyl, cycloalkylalkyl, aryl, alkylaryl, cycloalkylaryl, arylalkyl or arylcycloalkyl radicals, with the proviso that at least two of the variables R¹, R², R³, and R⁴ are substituted or unsubstituted aryl, arylalkyl or arylcycloalkyl radicals, as stabilizers of compositions curable with actinic radiation.

22. Use according to Claim 21, **characterized in that** at least two of the variables R¹, R², R³ and R⁴ are substituted or unsubstituted aryl radicals.

## Revendications

1. Masse durcissable à l'aide d'un rayonnement actinique, contenant, par rapport à sa quantité totale, de 0,1 à 5 % en poids d'au moins un composé (A), sélectionné parmi le groupe se composant de p-menthadiènes et de monomères oléfiniquement insaturés de la formule générale I
R¹R²C=CR³R⁴ (I),
où les radicaux R¹, R², R³ et R⁴ représentent, à chaque fois, indépendamment les uns des autres, des atomes d'hydrogène ou des radicaux, substitués ou non substitués, alkyle, cycloalkyle, alkylcycloalkyle, cycloalkylalkyle, aryle, alkylaryle, cycloalkylaryle, arylalkyle ou arylcycloalkyle, sous réserve de ce qu'au moins deux des variables R¹, R², R³ et R⁴ désignent des radicaux, substitués ou non substitués, aryle, arylalkyle ou arylcycloalkyle.

2. Masse durcissable à l'aide d'un rayonnement actinique selon la revendication 1, **caractérisée en ce qu'**au moins deux des variables R¹, R², R³, et R⁴ représentent des radicaux aryles substitués ou non substitués.

3. Masse durcissable à l'aide d'un rayonnement actinique selon la revendication 1 ou 2, **caractérisée en ce qu'**elle est un système liquide ou solide à 100%.

4. Masse durcissable à l'aide d'un rayonnement actinique selon l'une quelconque des revendications 1 à 3, **caractérisée en ce qu'**elle est durcissable à l'aide d'un rayonnement électromagnétique et/ou à l'aide d'un rayonnement corpusculaire.

5. Masse durcissable à l'aide d'un rayonnement actinique selon la revendication 4, **caractérisée en ce que** le rayonnement électromagnétique comprend le proche infrarouge (NIR), la lumière visible, le rayonnement UV, les rayons X et le rayonnement gamma et **en ce que** le rayonnement corpusculaire comprend le rayonnement d'électrons.

6. Masse durcissable à l'aide d'un rayonnement actinique selon la revendication 5, **caractérisée en ce que** le rayonnement électronique est le rayonnement UV.

7. Masse durcissable à l'aide d'un rayonnement actinique selon l'une quelconque des revendications 1 à 6, **caractérisée en ce qu'**elle contient, par rapport à sa quantité totale, de 0,1 à 2 % en poids d'au moins un composé (A).

8. Masse durcissable à l'aide d'un rayonnement actinique selon l'une quelconque des revendications 1 à 7, **caractérisée en ce que** le p-menthadiènene (A) est sélectionné parmi le groupe se composant de p-menthadiènes existant dans la nature.

9. Masse durcissable à l'aide d'un rayonnement actinique selon la revendication 8, **caractérisée en ce que** les p-menthadiènes (A) sont sélectionnées parmi le groupe se composant des alpha-, bêta- et gamma-terpinènes, des terpinolènes, des (+)-(S)-alpha-phellandrènes, des (-)-(R)-alpha-phellandrènes, des (+)-(S)-bêta-phellandrènes, des (-)-(R)-bêta-phellandrènes, des (+)-(R)-limonènes, des (-)-(S)-limonènes et des (±)-limonènes (dipentènes).

10. Masse durcissable à l'aide d'un rayonnement actinique selon la revendication 9, **caractérisée en ce qu'**elle contient des gamma-terpinènes.

11. Masse durcissable à l'aide d'un rayonnement actinique selon l'une quelconque des revendications 1 à 10, **caractérisée en ce qu'**il s'agit, dans le cas des radicaux aryles R¹, R², R³ et/ou R⁴ du composé (A) de la formule générale I, de radicaux phényles ou naphthyles.

12. Masse durcissable à l'aide d'un rayonnement actinique selon l'une quelconque des revendications 1 à 11, **caractérisée en ce** les substituants dans les radicaux R¹, R², R³ et R⁴ du composé (A) de la formule générale I sont des atomes ou des radicaux organiques électro-attracteurs ou électro-donneurs.

13. Masse durcissable à l'aide d'un rayonnement actinique selon la revendication 12, **caractérisée en ce que** les substituants dans les radicaux R¹, R², R³ et/ou R⁴ du composé (A) de la formule générale I sont des atomes d'halogène, des radicaux nitrile, nitro, des radicaux, partiellement ou complètement halogénés, alkyle, cycloalkyle, alkylcycloalkyle, cycloalkylalkyle, aryle, alkylaryle, cycloalkylaryle, arylalkyle ou arylcycloalkyle; des radicaux aryloxy, alkyloxy et cycloalkyloxy; des radicaux arylthio, alkylthio et cycloalkylthio; des groupements hydroxyles et/ou des groupements amino primaires, secondaires et/ou tertiaires.

14. Procédé en vue de la fabrication d'une masse durcissable à l'aide d'un rayonnement actinique selon l'une quelconque des revendications 1 à 13 par mélange de ses constituants, **caractérisé en ce que** l'on utilise, par rapport à la masse totale des constituants, de 0,1 à 5 % en poids d'au moins un composé (A), sélectionné parmi le groupe se composant des p-menthadiènes et de monomères oléfiniquement insaturés de la formule générale I
R¹R²C=CR³R⁴ (I),
où les radicaux R¹, R², R³ et R⁴ représentent, à chaque fois, indépendamment les uns des autres, des atomes d'hydrogène ou des radicaux, substitués ou non substitués, alkyle, cycloalkyle, alkylcycloalkyle, cycloalkylalkyle, aryle, alkylaryle, cycloalkylaryle, arylalkyle ou arylcycloalkyle, sous réserve de ce qu'au moins deux des variables R¹, R², R³ et R⁴ désignent des radicaux, substitués ou non substitués, aryle, arylalkyle ou arylcycloalkyle.

15. Procédé selon la revendication 14, **caractérisé en ce qu'**au moins deux des variables R¹, R², R³ et R⁴ représentent des radicaux aryles substitués ou non substitués.

16. Utilisation de masses durcissables à l'aide d'un rayonnement actinique selon l'une quelconque des revendications 1 à 13, en vue de la fabrication de masses durcissables à l'aide d'un rayonnement actinique.

17. Utilisation selon la revendication 16, **caractérisé en ce que** les masses durcissables à l'aide d'un rayonnement actinique sont des revêtements, des vernissages, des pièces de forme et des feuilles auto-portantes.

18. Utilisation selon la revendication 17, **caractérisé en ce que** les revêtements, les vernissages et les feuilles auto-portantes servent à la protection des surfaces de substrats contre les dégâts causés par une action mécanique et/ou servent à leur décoration.

19. Utilisation selon la revendication 18, **caractérisé en ce qu'**il s'agit, dans le cas des substrats, de véhicules ou des pièces de ceux-ci, de constructions, de meubles, de fenêtres et de portes, de petites pièces industrielles, des bobines, de récipients, d'emballages, de lingeries ou d'articles de toilette, de feuilles, de pièces optiques, de pièces électrotechniques, de pièces mécaniques, de pièces pour articles de toilette ainsi que de corps creux en verre.

20. Procédé en vue de la fabrication de masses durcissables à l'aide d'un rayonnement actinique à partir de masses durcissables à l'aide d'un rayonnement actinique par durcissement sous rayonnement, **caractérisé en ce que** l'on utilise, en l'occurrence, une masse durcissable à l'aide d'un rayonnement actinique selon l'une quelconque des revendications 1 à 13 ou une masse durcissable à l'aide d'un rayonnement actinique, fabriquée conformément au procédé selon la revendication 14 ou 15.

21. Utilisation de p-menthadiènes et de monomères oléfiniquement insaturés de la formule générale I
R¹R²C=CR³R⁴ (I),
où les radicaux R¹, R², R³ et R⁴ représentent, à chaque fois, indépendamment les uns des autres, des atomes d'hydrogène ou des radicaux, substitués ou non substitués, alkyle, cycloalkyle, alkylcycloalkyle, cycloalkylalkyle, aryle, alkylaryle, cycloalkylaryle, arylalkyle ou arylcycloalkyle, sous réserve de ce qu'au moins deux des variables R¹, R², R³ et R⁴ désignent des radicaux, substitués ou non substitués, aryle, arylalkyle ou arylcycloalkyle, en tant qu'agents stabilisateurs des masses durcissables à l'aide d'un rayonnement actinique.

22. Procédé selon la revendication 21, **caractérisé en ce qu'**au moins deux des variables R¹, R², R³ et R⁴ représentent des radicaux aryles substitués ou non substitués.
